# EUROPÄISCHE PATENTANMELDUNG

(11) **EP 3 208 204 A1**
(43) Veröffentlichungstag der Anmeldung: **23.08.2017**
(21) Anmeldenummer: 17156221.8
(22) Anmeldetag: 15.02.2017
(51) Int. Cl.: B65D 1/02, A23B 5/00

(54) **KUNSTSTOFFFLASCHE UND VERWENDUNG DERSELBEN**

(30) Priorität: 19.02.2016 DE 102016002154
(71) Anmelder: Pumperlgsund GmbH, 80331 München (DE)
(72) Erfinder: Göktekin, Jan, 81541 München (DE); König, Fabian, 80331 München (DE)
(74) Vertreter: Kirchner, Veit

(57) **Zusammenfassung**

Kunststoffflasche (10) mit einem nach innen gewölbten Boden (12), wobei in den Boden radiale Rippen (14) eingeformt sind, und Verwendung derselben zur Befüllung mit flüssigen Hühnereiweiß.

## Beschreibung

Die Erfindung berifft eine Kunststoffflasche und deren Verwendung.

Kunststoffflaschen sind vorbekannt. Sie werden z. B. aus PET hergestellt und u.a. zur Abfüllung, Lagerung und Transport von Getränken oder anderen Flüssigkeiten verwendet. Derartige Flaschen haben zur Erhöhung der Stabilität häufig einen nach innen gewölbten Boden. Vorbekannt ist auch die Abfüllung und der Vertrieb von flüssigem Hühnereiweiß in Kunststoffflaschen.

Ein Problem ist jedoch die Haltbarkeit des derart vertriebenen flüssigen Hühnereiweißes. Ein Vertrieb in gekühlter Form ist wirtschaftlich aufwendig und stößt beim Einzelhandel auf Ablehnung, da die Kühlung über die gesamte Warenumschlagskette bis hin zur Abgabe an den Endverbraucher kontinuierlich aufrecht erhalten werden muss.

Die vorliegende Erfindung beschäftigt sich daher mit der Aufgabe, die für den Vertrieb von flüssigen Hühnereiweiß verwendeten Kunststoffflaschen dahingehend weiter zu entwickeln, dass ein ungekühlter und kostengünstiger Vertrieb bei gleichzeitiger langer Haltbarkeit ermöglicht wird.

Gelöst wird diese Aufgabe durch eine Kunststoffflasche mit den Merkmalen des Anspruchs 1. Vorteilhafte Ausgestaltungen ergeben sich aus den Unteransprüchen 2 bis 4. Weiter wird die Aufgabe gelöst durch die erfindungsgemäße Verwendung der erfindungsgemäßen Kunststoffflasche zur Befüllung mit flüssigem Hühnereiweiß gemäß dem Nebenanspruch 5. Vorteilhafte Weiterbildungen der erfindungsgemäßen Verwendung sind Gegenstand der Unteransprüche 6 bis 7.

Erfindungsgemäß werden in den nach innen gewölbten Boden einer Kunststoffflasche radiale Rippen eingeformt. Dadurch kann die Stabilität des Bodens und der Kunststoffflasche insgesamt erheblich gesteigert werden. Dies ermöglicht es, flüssiges Hühnereiweiß in einem Temperaturbereich von - 20°C bis + 60°C sicher in der Kunststoffflasche aufzubewahren, insbesondere ohne dass die Kunststoffflasche reißt, platzt oder anderweitig zerstört oder undicht wird. Bei ungekühltem Vertrieb muss ein Produkt Temperaturschwankungen von - 20°C bis + 60°C standhalten, und in diesem Temperaturbereich unterliegt flüssiges Hühnereiweiß erhebliche Volumenschwankungen, welche erheblichen Druck und Kräfte erzeugen, denen die Flasche und insbesondere der Boden standhalten muss.

Bevorzugter Weise sind die Rippen an der Innenseite des Bodens ausgebildet, d. h. sie sind gegenüber dem übrigen Boden zur Innenseite der Flasche hin erhaben. Vorteilhafter Weise befinden sich an der Außenseite des Bodens den Rippen entsprechende Vertiefungen, so dass der Boden im Bereich der Rippen mit ähnlicher Materialstärke ausgebildet werden kann wie im Bodenbereich zwischen den Rippen, was die kostengünstige Herstellung in einer Blasform erleichtert.

In einer anderen bevorzugten Ausgestaltung sind mindestens vier, vorzugsweise fünf, sternförmig angeordnete Rippen vorgesehen, welche sich nach außen verjüngen und zum Flaschenrand hin spitz zulaufen. Diese Ausgestaltung ermöglicht eine besonders gute Aufnahme der auf den Boden wirkenden Kräfte und deren Einleitung in die Flaschenwände.

In einer anderen bevorzugten Ausgestaltung ist die Kunststoffflasche aus PET hergestellt. Bei PET handelt es sich um einen besonders stabilen und erfindungsgemäß für die Abfüllung von flüssigen Hühnereiweiß besonders geeigneten Kunststoff.

Neben der erfindungsgemäßen Kunststoffflasche umfasst die vorliegende Erfindung die Verwendung der Kunststoffflasche zur Befüllung mit flüssigem Hühnereiweiß.

In einer bevorzugten Ausgestaltung der erfindungsgemäßen Verwendung wird die Kunststoffflasche dazu verwendet, das eingefüllte Hühnereiweiß einer Haltbarmachung zu unterziehen. Diese Verwendung hat den Vorteil, dass das frische, flüssige Hühnereiweiß, ggf. nach einer Pasteurisierung, in die Flasche eingefüllt und dann hygienisch verschlossen werden kann. Wenn dann eine Haltbarmachung in der bereits hygienisch verschlossenen Falsche erfolgt, hat dies den Vorteil, dass das Hühnereiweiß nach der Haltbarmachung nicht mehr um- bzw. abgefüllt werden muss, und mit einem derartigen Prozess verbundene Verunreinigungen - die ggf. schon durch Luftkontakt auftreten können - vermieden werden können. Das flüssige Hühnereiweiß kann also in der Verpackung, in der die Haltbarmachung durch Langzeitwärmebehandlung erfolgt, an den Endverbraucher abgegeben werden.

In einer weiter bevorzugten Ausgestaltung der erfindungsgemäßen Verwendung umfasst die Verwendung zur Haltbarmachung eine Langzeitwärmebehandlung über mindestens 72 Stunden, vorzugsweise über mindestens 96 Stunden und weiter vorzugsweise über mindestens 120 Stunden. Während dieser Langzeitwärmebehandlung wird das flüssige Hühnereiweiß durchgängig in einem Temperaturbereich von 40°C bis 50°C, vorzugweise von 42°C bis 48°C und weiter vorzugsweise bei einer konstanten Temperatur von 45°C gehalten. In aufwendigen und langwierigen Versuchen wurde im Rahmen der Erfindung herausgefunden, dass mit der vorbeschriebenen Langzeitwärmebehandlung in der erfindungsgemäßen Flasche eine besonders gute Haltbarkeit des Hühnereiweißes erreicht werden kann, nämlich von deutlich über 6 Monaten in ungekühltem Zustand. Dabei werden optimale Ergebnisse bei einer Langzeitwärmebehandlung von ca. 96 Stunden und einer durchgängigen konstanten Temperatur von ca. 45°C erzielt.

Die Verwendung der erfindungsgemäßen Flasche ermöglicht einerseits eine kostengünstige und gewichtsoptimierte Verpackung des flüssigen Hühnereiweißes, und andererseits die Langzeitwärmebehandlung bei einer Temperatur im Bereich von ca. 45°C über den langen Zeitraum von 3, 4 oder 5 Tagen in der Endverpackung, wobei dieses Produkt dann in der Endverpackung ungekühlt und ohne Wärmeschutz vertrieben werden kann, da es Temperaturschwankungen von - 20°C bis + 60°C standhält.

Dadurch werden mit der erfindungsgemäßen Kunststoffflasche und der erfindungsgemäßen Verwendung zur Abfüllung von flüssigem Hühnereiweiß und Haltbarmachung in dieser für den Endverbraucher bestimmten Verpackung erheblich wirtschaftliche Vorteile erzielt.

Ein Ausführungsbeispiel der erfindungsgemäßen Flasche ist anhand der Figuren 1 bis 3 näher erläutert. Dabei zeigt:
- Figur 1:: Eine Seitenansicht der erfindungsgemäßen Flasche, und
- Figur 2:: Eine weitere Seitenansicht der erfindungsgemäßen Flasche, und
- Figur 3:: Eine Draufsicht auf den Boden der erfindungsgemäßen Flasche.

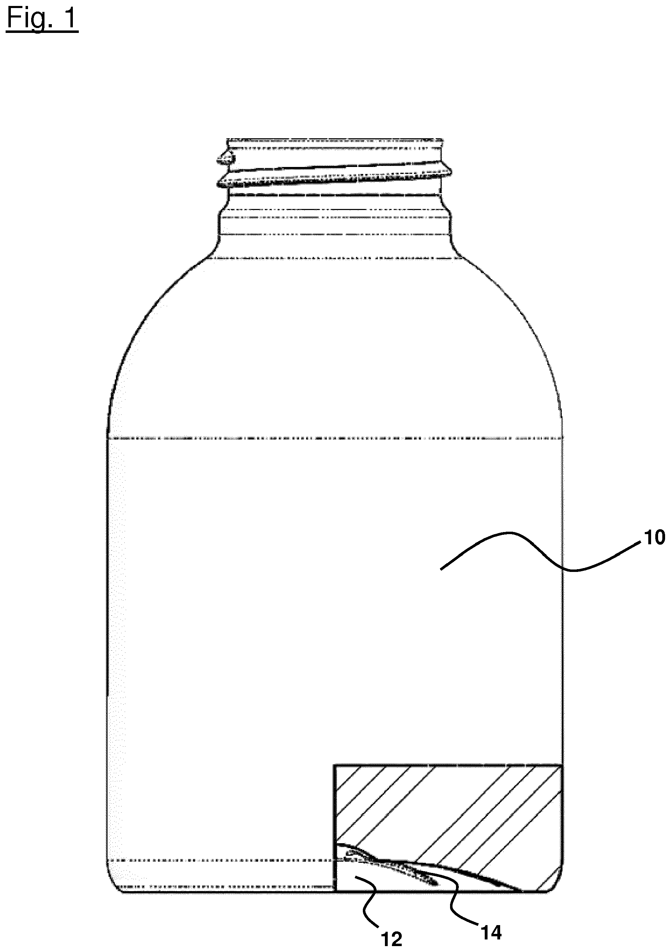

Figur 1 zeigt eine Seitenansicht der erfindungsgemäßen Flasche 10, bei der unten rechts ein Teil der Seitenwand ausgeschnitten ist, womit der Blick auf den nach innen gewölbten Boden 12 frei gegeben ist. In den Boden 12 sind radiale Rippen 14 eingeformt.

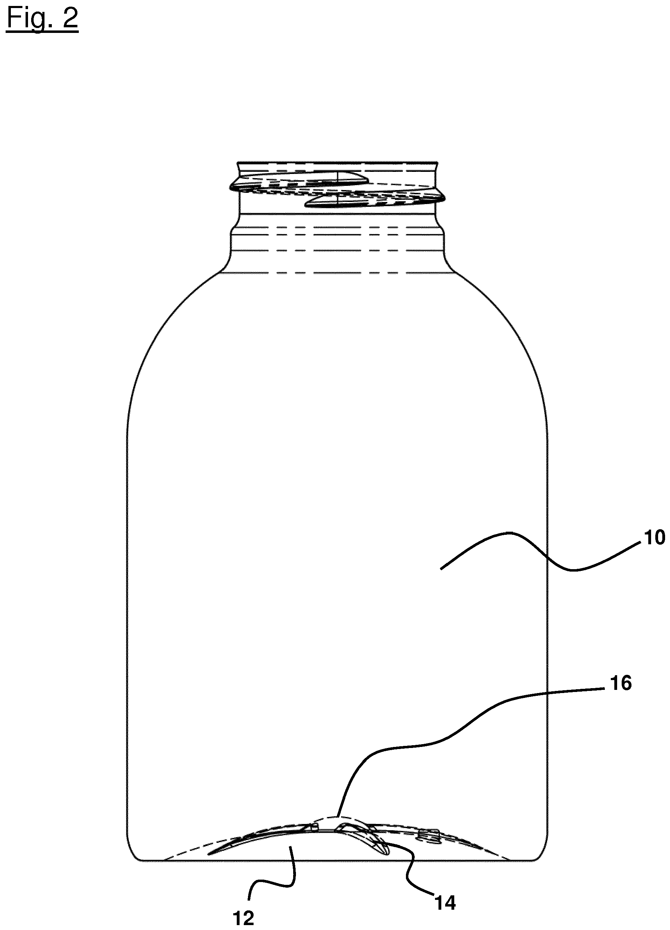

Figur 2 zeigt eine weitere Seitenansicht der erfindungsgemäßen Flasche 10 mit dem nach innen gewölbten Boden 12. In den Boden sind radiale Rippen 14 eingeformt, die zur Innenseite der Flasche erhaben sind.

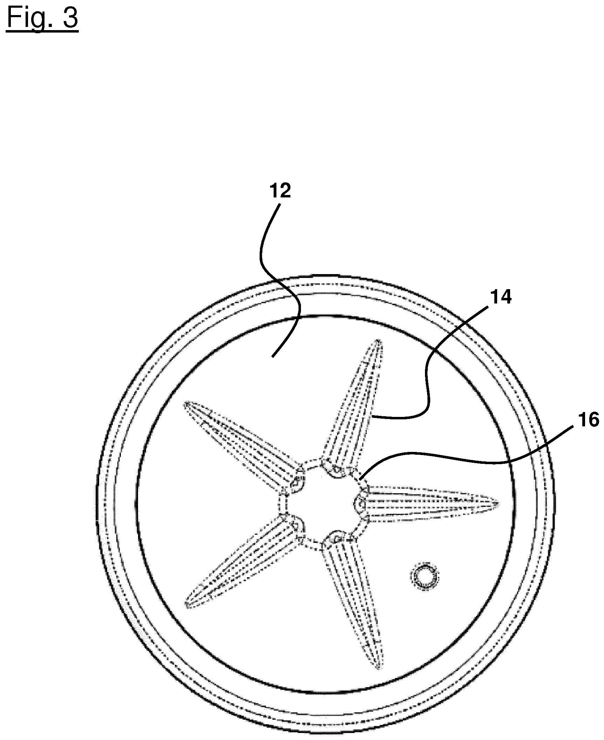

Figur 3 zeigt eine Draufsicht auf den Flaschenboden 12. Der Flaschenboden ist mit fünf radialen Rippen 14 versehen, die sternförmig angeordnet sind und sich nach außen verjüngen und zum Flaschenrand hin spitz zulaufen. Im zentralen Bereich des Flaschenbodens gehen die Rippen in eine ringförmige Wölbung 16 über, die stärker als der übrige Boden nach innen gewölbt ist und eine Art Kuppe auf dem gewölbten Boden 12 bildet. Diese stärker gewölbte Kuppe 16 und die von dieser nach außen laufenden Rippen 14 können auf den Boden wirkende Kräfte besonders gut nach außen in den Flaschenrand ableiten.

Daher ist die erfindungsgemäße Ausgestaltung des Flaschenbodens im besonderen Maße für die erfindungsgemäße Verwendung zur Befüllung mit flüssigen Hühnereiweiß und dessen Haltbarmachung in der für den Endverbraucher bestimmten Verpackungsflasche geeignet.

## Patentansprüche

1. Kunststoffflasche (10) mit einem nach innen gewölbten Boden (12), wobei der Boden mit radialen Rippen (14) versehen ist.

2. Kunststoffflasche nach Anspruch 1, wobei die Rippen an der Innenseite des Bodens ausgebildet sind, und sich an der Außenseite des Bodens den Rippen entsprechende Vertiefungen befinden.

3. Kunststoffflasche nach Anspruch 1 oder 2, wobei mindestens vier, vorzugsweise fünf, sternförmig angeordnete Rippen vorgesehen sind, welche sich nach außen verjüngen und spitz zulaufen.

4. Kunststoffflasche nach einem der vorhergehenden Ansprüche, wobei es sich um eine PET-Flasche handelt.

5. Verwendung der Kunststoffflasche nach einem der vorhergehenden Ansprüche zur Befüllung mit flüssigem Hühnereiweiß.

6. Verwendung nach dem vorhergehenden Anspruch, wobei die Verwendung die Haltbarmachung des in der Flasche eingefüllten Hühnereiweißes umfasst.

7. Verwendung nach dem vorhergehenden Anspruch, wobei die Haltbarmachung eine Langzeitwärmebehandlung über mindestens 72 Stunden, vorzugsweise über mindestens 96 Stunden, weiter vorzugsweise über mindestens 120 Stunden in einem Temperaturbereich von 40° bis 50°C, vorzugsweise von 42°C bis 48°C, weiter vorzugsweise bei einer konstanten Temperatur von 45°C umfasst.
